# EUROPEAN PATENT SPECIFICATION

(11) **EP 1 661 007 B1**
(45) Date of publication and mention of the grant of the patent: **10.12.2008**
(21) Application number: 04780327.5
(22) Date of filing: 06.08.2004
(51) Int. Cl.: G06F 13/10

(54) **SYSTEM AND METHOD FOR MONITORING AND MANAGING CONNECTION MANAGER ACTIVITY**
SYSTME UND VERFAHREN ZUR ÜBERWACHUNG UND VERWALTUNG VON VERBINDUNGSMANAGER-AKTIVITÄT
SYSTEME ET PROCEDE DE SURVEILLANCE ET DE GESTION D'ACTIVITE DE GESTIONNAIRE DE CONNEXIONS

(30) Priority: 08.08.2003 US 493873 P; 30.12.2003 US 749135
(43) Date of publication of application: 31.05.2006
(73) Proprietor: Intel Corporation, Santa Clara, CA 95052 (US)
(72) Inventor: UNOUYE, Jon, Portland, OR 97229 (US); GUPTA, Ajay, Temecula, CA 92591 (US); CHIN, Alan, San Diego, CA 92127 (US)
(74) Representative: Dunlop, Hugh Christopher
(86) International application number: PCT/US2004/025472
(87) International publication number: WO 2005/015831

(56) References cited:
- US-A- 6 112 263
- US-A1- 2003 041 179

## Description

### BACKGROUND OF THE INVENTION

Wireless technologies have significantly increased in demand and production. The rapid deployment of private and public wireless networks has introduced the convenience of "hotspots" that allow mobile computer systems to access network resources. Generally, hotspots are geographically specific locations where access points provide broadband network services to wireless devices such as, but not limited to, laptop computers, personal digital assistants (PDAs), mobile telephones, and pagers. Unlike wired technologies, however, wireless devices require a connection manager to assist in the discovery of networks and to connect the wireless device to the desired network. Typically, connection managers utilize policies or rules to automatically connect to a recognized wireless network via an access point. Such polices and rules eliminate the need for manual intervention in order to achieve network connectivity. One example of a connection manager is the "ZERO CONFIG" device management utility offered by Microsoft Corporation of Redmond, Washington.

Connection managers may be found incorporated in computer operating systems or may be installed by information technology staff for remote access. Additionally, public hotspot vendors may provide subscribers with connection managers specifically tailored for the public network. Consequently, a wireless device may have multiple connection managers, implementing substantially different policies, installed on its system. Connection managers often register with a device driver of a network interface in order to customize the configuration of the network adapter. The connection manager relies on this custom configuration when implementing its policy or policies. Unfortunately, problems arise when multiple connection managers operate concurrently. As each connection manager attempts to implement its policy or policies, failure may occur in the network connection or within the execution of applications on the local system. Inter-dependency and communication between connection managers is not a feasible approach for solving these problems because each connection manager would require familiarity with every other connection manager that might be installed on the same system, even those which are not yet in existence when the particular connection manager was created.

One aspect of the present invention is an apparatus as defined in independent claim 1. Another aspect of the invention is a method as defined in independent claim 9. Further embodiments of the invention are specified in the respective appended dependent claims.

### BRIEF DESCRIPTION OF THE DRAWINGS

Fig. 1 displays a block diagram representation of a network environment in accordance with an exemplary embodiment of the present invention.
Fig. 2 displays a block diagram representation of an exemplary computing environment.
Figs. 3A-3C display a flowchart representation of a method of monitoring and managing connection manager activity in accordance with an exemplary embodiment of the present invention.
Fig. 4 displays a flowchart representation of a method of applying a policy or policies after detecting network access data from a third party connection manager.
Figs. 5A-5B display a flowchart representation of a method of monitoring and managing connection manager activity when a third party connection manager is registered with the device driver.

### DETAILED DESCRIPTION OF THE DRAWINGS

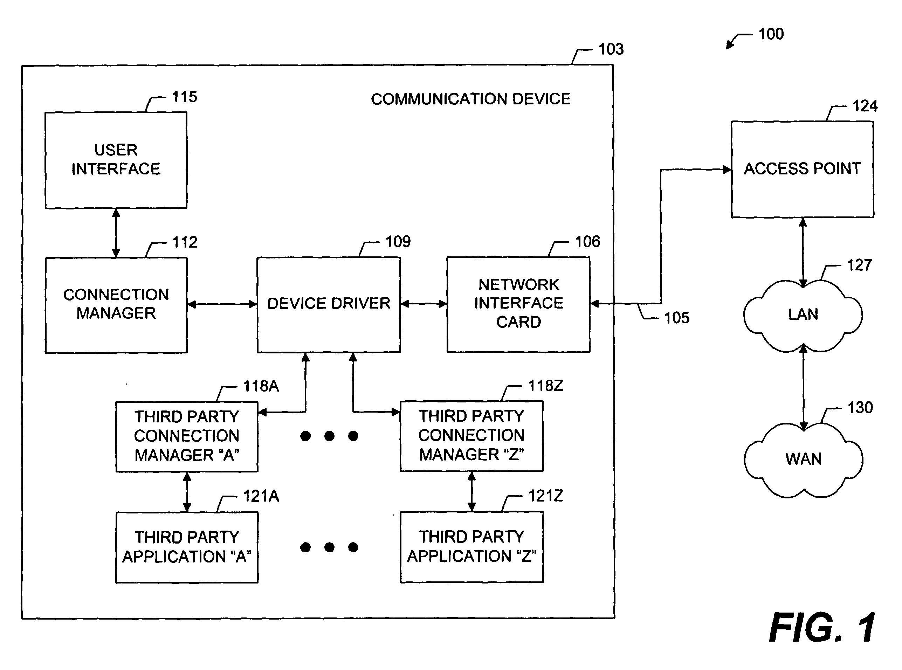

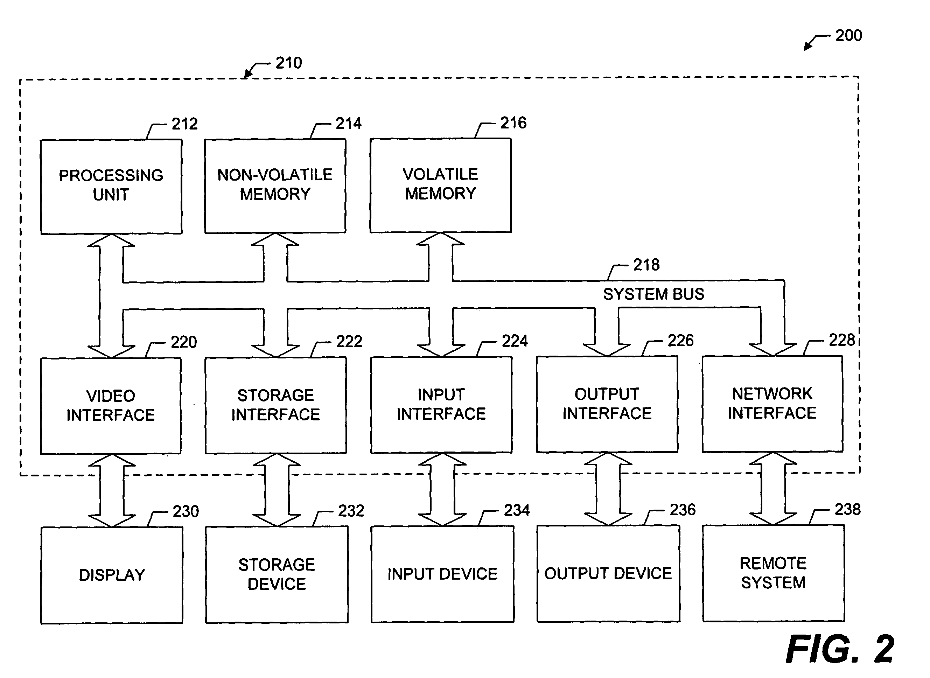

Referring now to the drawings, in which like numerals refer to like parts throughout the several views, Fig. 1 displays a block diagram representation of a network environment 100 in accordance with an exemplary embodiment of the present invention. The network environment 100 may comprise a communication device 103. The communication device 103 may be configured with hardware and software (see Fig. 2) appropriate to perform tasks and provide capabilities and functionality as described herein. The communication device 103 may comprise a network interface 106, 228, a device driver 109, a connection manager 112, a user interface 115, at least one third party connection manager 118A-118Z, and at least one third party application 121A-121Z.

The network interface 106, 228 (sometimes referred to as a network adapter) may be communicatively connected to the device driver 109. One skilled in the art will recognize that a network interface 106, 228 may typically be a hardware device, such as a network interface card 106 or an expansion card of the communication device 103 which facilitates connectivity between the communication device 103 and a network, such as a local area network 127 or a wide area network 130. Although not shown in Fig. 1, the network interface 106, 228 may comprise a transceiver (e.g., radio transceiver or infra-red transceiver) that enables wireless communication between the communication device 103 and an access point 124 of a network.

The device driver 109 may communicatively connect to the network interface 106, 228 the connection manager 112, and at least one third party connection manager 118A-118Z, such as third party connection manager "A" 118A and third party connection manager "Z" 118Z as shown in Fig. 1. The device driver 109 may comprise program modules or hardware (see Fig. 2) appropriate to perform tasks and provide capabilities and functionality as described herein. Typically, a device driver 109 may translate data between a device, such as the network interface card 106, and programs or applications (e.g., the programs or applications residing on the communication device 103) that use the device. Each device (hardware or software) that connects to or resides on the communication device 103 may utilize a specialized set of commands that only the device driver 109 may translate. Programs or applications on the communication device 103 may access a device by using a generic set of commands. The device driver 109, therefore, may be adapted to accept the generic commands from a program or application and translate the generic commands into specific commands required by the device.

Additionally, the device driver 109 may be adapted to monitor the communication device 103 for network access data. Network access data may include, but is not limited to, communication from a third party connection manager 118 that attempts to control, configure, or access the network interface 106, 228 via the device driver 109. For example and not limitation, the network access data may be network driver interface specification (NDIS) object identifiers. One skilled in the art will recognize that NDIS is a software interface designed to allow different network protocols to communicate with different types of network adapters, such as the network interface 106, 228. Specifically, NDIS object identifiers are number sequences that, when interpreted by the device driver 109, enable compatibility between one network adapter and multiple protocols or between one protocol and different network adapters (e.g., a standard application program interface (API) for the network interface 106, 228). A predefined set of NDIS object identifiers may be used by a third party connection manager 118 for controlling, configuring, and accessing the network interface 106, 228. The device driver 109 may be further adapted to notify or alert the connection manager 112 when the device driver 109 detects network access data.

The connection manager 112 may communicatively connect to the device driver 109 and the user interface 115. The connection manager 112 may be configured with hardware and software (see Fig. 2) appropriate to perform tasks and provide capabilities and functionality as described herein. The connection manager 112 may be adapted to receive notification data from the device driver 109, register with the device driver 109, unregister with the device driver 109, provide notification data to the user interface 115, and receive user input from the user interface 115. Generally, a connection manager 112 may assist in discovering networks and connecting a wireless communication device 103 to the correct or desired network. To reduce the process of manually discovering networks and connecting a wireless communication device 103 to a discovered network, the connection manager 112 may comprise policies or rules that dictate the behavior of the connection manager 112 under certain circumstances or events. For example and not limitation, the connection manager 112 may comprise one or more policies that require the connection manager 112 to automatically unregister with a device driver 109 when a third party connection manager 118 attempts to configure or access the network interface 106, 228. In another example, a policy may require the connection manager 112 to notify the user every time a third party connection manager attempts to configure or access the network interface 106, 228. One skilled in the art will recognize that policies or rules may be defined in a variety of configurations and may require the connection manager 112 to perform different functions under different circumstances. In another embodiment of the present invention, the connection manager 112 may be further adapted to disable a third party connection manager 118. Disabling a third party connection manager 118 may prevent the third party connection manager 118 from configuring or accessing the network interface 106, 228 via the device driver 109.

The user interface 115 may be adapted to display data, such as notification data, to a user and receive user input. Notification data may include, but is not limited to, an indication that a third party connection manager 118 is attempting to configure or access the network interface 106, 228, a confirmation request to unregister the connection manager 112, a confirmation request to disable a third party connection manager 118, and a set of instructions informing a user how to manually enable or disable a connection manager 112 or a third party connection manager 118. The user interface 115 may also be adapted to receive user input from a user and provide the user input to the connection manager 112. One skilled in the art will recognize that the user interface 115 may be designed in a variety of embodiments and formats and may range from a simple to a more complex configuration. In exemplary embodiments of the present invention, the user interface 115 may comprise a keypad, display, touch screen or other convenient device, and may also comprise program modules or machine instructions that perform the tasks described herein, which instructions may be executed on a processing unit 212, such as the processing unit 212 of the communication device 103 (see Fig. 2).

Each third party connection manager 118A-118Z may communicatively connect to the device driver 109 and a corresponding third party application 121A-121Z. A third party connection manager 118 may assist in discovering networks and connecting a wireless communication device 103 to the correct or desired network via the network interface 106, 228. Similar to the connection manager 112 described above, each third party connection manager 118A-118Z may comprise policies or rules that dictate behavior of the third party connection manager 118 under certain circumstances or events. Generally, the policies of each third party connection manager 118A-118Z may differ from the policies of other third party connection managers 118A-118Z or of the connection manager 112. Typically, only one third party connection manager 118 or connection manager 112 may be registered with the device driver 109 at any given time. Because of the differences between policies, simultaneous registration with the device driver 109 by the connection manager 112 and a third party connection manager 118 may cause system or network failure due to implementation of conflicting policies. For example and not limitation, the connection manager 112 may configure the network interface 106, 228 in such a way that prevents the third party application 121 associated with the third party connection manager 118 from properly functioning.

Each third party application 121A-121Z may communicatively connect to a corresponding third party connection manager 118A-118Z. A third party application 121 may be configured with hardware and software (see Fig. 2) appropriate to perform multiple tasks and provide multiple capabilities and functionality. Generally a third party application 121 may comprise a program or group of programs designed specifically for user interaction. Third party applications 121A-121Z may include, but are not limited to, word processing programs, spreadsheet programs, and database programs. In one embodiment of the present invention, third party applications 121A-121Z may utilize network resources and, thus, may require communication with the network interface 106, 228. Each third party application 121A-121Z may require a unique configuration of the network interface 106, 228, which may be implemented through a corresponding third party connection manager 118A-118Z.

The network environment 100 may further comprise an access point 124, such as a transceiver, for conducting wireless communications 105 with the communication device 103, local area network (LAN) 127, and wide area network (WAN) 130 such as, but not limited to, the Internet. The access point 124 may communicatively connect to the local area network 127 and the communication device 103 via the network interface 106, 228. Generally, the access point 124 may be a hardware device and/or software that act as a communication hub between the communication device 103 and the local area network 127. The access point 124 may be adapted to receive wireless communication from, and provide wireless network communication to, the communication device 103. The local area network 127 may communicatively connect to the access point 124 and the wide area network 130. One skilled in the art will recognize that the local area network 127 and the wide area network 130 may typically comprise the infrastructure and facilities appropriate to communicatively connect a group of two or more communication devices 103 (including, without limitation, a plurality of computer systems in communication with each other). The local area network 127, wide area network 130, and communication devices 103 may be configured in multiple topologies including, but not limited to, star, bus, or ring configurations. Also, the local area network 127, wide area network 130, and communication devices 103 may be broadly categorized as belonging to a particular architecture including, but not limited to, peer-to-peer or client/server architectures.

In operation, the connection manager 112 may register with the device driver 109 during initialization of the communication device's 103 operating system. Registering the connection manager 112 with the device driver 109 may enable the device driver 109 to monitor the communication device 103 for network access data. Normal programs and/or applications on the communication device 103 may access the network through the device driver 109 and network interface 106, 228, but the device driver 109 may continue to monitor for network access data from a third party connection manager 118 attempting to register with the device driver 109 or configure the network interface 106, 228. Once the device driver 109 detects network access data from a third party connection manager 118, the device driver 109 may provide notification data (e.g., an alert) to the connection manager 112.

The connection manager 112 may receive the notification data from the device driver 109 and apply a policy or policies that may or may not require disabling the connection manager 112. If a policy requires the connection manager 112 to be disabled, then the connection manager 112 may unregister with the device driver 109 and the device driver 109 stops monitoring the communication device 103 for network access data. If the policy or policies do not require the connection manager 112 to be disabled, then the connection manager 112 may provide the notification data to the user interface 115, which may display the notification to a user. In lieu of applying a policy, the connection manager 112, alternatively, may provide the notification data to the user interface 115, which may display the notification and a response request to the user. The user may provide user input to the user interface 115 indicating whether the connection manager 112 should be disabled. The user interface 115 may provide the user input to the connection manager 112 for processing. If the user input indicates that the connection manager 112 be disabled, then the connection manager 112 may unregister with the device driver 109, and the device driver 109 may stop monitoring the communication device 103 for network access data.

In another embodiment of the present invention, the connection manager 112, after receiving notification data from the device driver 109, may apply one or more policies that may or may not require the connection manager 112 to disable the third party connection manager 118. If a policy requires the connection manager 112 to disable the third party connection manager 118, then the connection manager 112 may disable the third party connection manager 118 so that the third party connection manager 118 may not access or configure the network interface 106, 228 via the device driver 109. Alternatively, instead of automatically disabling the third party connection manager 118, the connection manager 112 may provide notification data to the user interface 115 which may display a message indicating that the third party connection manager 118 may or should be disabled manually by the user.

In yet another embodiment, a third party connection manager 118 may have already registered with the device driver 109, before the connection manager 112 attempts to register with the device driver 109. The connection manager 112 may apply a policy or policies that require the third party connection manager 118 to be unregistered with the device driver 109. The connection manager 112 may unregister the third party connection manager 118 with the device driver 109 and, subsequently, the connection manager 112 may register with the device driver 109, which may enable the device driver 109 to monitor the communication device 103 for network access data. In lieu of applying a policy, the connection manager 112 may provide a message to the user interface 115 that specifies that the third party connection manager 118 may or should be unregistered from the device driver 109 manually by the user. The user interface 115 may display the message to the user.

Although radio frequency wireless is one form of communication 105, one skilled in the art will recognize that connecting communicatively may include any appropriate type of connection including, but not limited to, analog, digital, wireless and wired communication channels. Such communication channels may include, but are not limited to, copper wire, optical fiber, radio frequency, infrared, satellite, or other media.

Fig. 2 displays a block diagram representation of an exemplary computing environment 200. Communication devices 103 of the environment 200 may include, but are not limited to, personal computers, mainframe computers, servers, hand-held or laptop devices, multiprocessor systems, microprocessor-based systems, set top boxes, programmable consumer electronics, network PCs, minicomputers, mainframe computers, distributed computing environments that include any of the above systems or devices, and the like. However, it should be understood that the features and aspects of the exemplary embodiment of the present invention may be implemented by or into a variety of systems and system configurations and any examples provided within this description are for illustrative purposes only.

Fig. 2 and the following discussion provide a general overview of a platform onto which an embodiment of the present invention, or portions thereof, may be integrated, implemented and/or executed. Although reference has been made to instructions within a software program being executed by a processing unit, those skilled in the art will understand that at least some of the functions performed by the software may also be implemented by using hardware components, state machines, or a combination of any of these techniques. In addition, a software program which may implement an embodiment of the present invention may also run as a stand-alone program or as a software module, routine, or function call, operating in conjunction with an operating system, another program, system call, interrupt routine, library routine, or the like. The term program module is used herein to refer to software programs, routines, functions, macros, data, data structures, or any set of machine readable instructions or object code, or software instructions that may be compiled into such, and executed by a processing unit 212.

Those skilled in the art will appreciate that the computing environment illustrated in Fig. 2 may take on many forms and may be directed towards performing a variety of functions. Generally, the computing environment illustrated in Fig. 2 may be any system that includes a computer processor. Examples of such forms and functions may include, but are not limited to, personal computers, hand-held devices such as personal data assistants, note-book computers, lap-top computers, mainframe computers, servers and a variety of other applications, each of which may serve as an exemplary environment for embodiments of the present invention.

The exemplary computing device 210 (e.g., communication device 103) may comprise various components including, but not limited to, a processing unit 212, non-volatile memory 214, volatile memory 216, and a system bus 218 that couples the non-volatile memory 214 and volatile memory 216 to the processing unit 212. The non-volatile memory 214 may include a variety of memory types including, but not limited to, read only memory (ROM), electronically erasable read only memory (EEROM), electronically erasable and programmable read only memory (EEPROM), electronically programmable read only memory (EPROM), electronically alterable read only memory (EAROM), FLASH memory, bubble memory, battery backed random access memory (RAM), CDROM, digital versatile disks (DVD) or other optical disk storage, magnetic cassettes, magnetic tape, magneto-optical storage devices, magnetic disk storage or other magnetic storage devices, or any other medium which may be used to store the desired information. The non-volatile memory 214 may provide storage for power-on and reset routines (bootstrap routines) that are invoked upon applying power or resetting the computing device 210. In some configurations the non-volatile memory 214 may provide the basic input/output system (BIOS) routines that are utilized to perform the transfer of information between elements within the various components of the computing device 210.

The volatile memory 216 may include, but is not limited to, a variety of memory types and devices including, but not limited to, random access memory (RAM), dynamic random access memory (DRAM), bubble memory, registers, or the like. The volatile memory 216 may provide temporary storage for routines, modules, functions, macros, data etc. that are being or may be executed by, or are being accessed or modified by, the processing unit 212.

In another embodiment, the non-volatile memory 214 and/or the volatile memory 216 may comprise a remote storage facility accessible through a wired and/or wireless network system. Additionally, the non-volatile memory 214 and/or the volatile memory 216 may comprise a memory system comprising a multi-stage system of primary and secondary memory devices, as described above. The primary memory device and secondary memory device may operate as a cache for the other or the second memory device may serve as a backup to the primary memory device. In yet another embodiment, the non-volatile memory 214 and/or the volatile memory 216 may comprise a memory device configured as a simple database file or as a searchable, relational database using a query language, such as SQL.

The computing device 210 may access one or more external display devices 230 such as a CRT monitor, LCD panel, LED panel, electro-luminescent panel, or other display device, for the purpose of providing information or computing results to a user. In some embodiments, the external display device 230 may actually be incorporated into the product itself. The processing unit 212 may interface to each display device 230 through a video interface 220 coupled to the processing unit 210 over the system bus 218.

The computing device 210 may send output information to the display 230 and to one or more output devices 236 such as a speaker, modem, printer, plotter, facsimile machine, RF or infrared transmitter, computer or any other of a variety of devices that may be controlled by the computing device 210. The processing unit 212 may interface to each output device 236 through an output interface 226 coupled to the processing unit 212 over the system bus 218.

The computing device 210 may receive input or commands from one or more input devices 234 such as, but not limited to, a keyboard, pointing device, mouse, modem, RF or infrared receiver, microphone, joystick, track ball, light pen, game pad, scanner, camera, computer or the like. The processing unit 212 may interface to each input device 234 through an input interface 224 coupled to the processing unit 212 over the system bus 218.

It will be appreciated that program modules implementing various embodiments of the present invention may be stored in the non-volatile memory 214, the volatile memory 216, or in a remote memory storage device accessible through the output interface 226 and the input interface 224. The program modules may include an operating system, application programs, other program modules, and program data. The processing unit 212 may access various portions of the program modules in response to the various instructions contained therein, as well as under the direction of events occurring or being received over the input interface 224.

The computing device 210 may provide data to and receive data from one or more other storage devices 232, which may provide volatile or non-volatile memory for storage and which may be accessed by computing device 210. The processing unit 212 may interface to each storage device 232 through a storage interface 222 over the system bus 218.

The interfaces 220, 222, 224, 226, and 228 may include one or more of a variety of interfaces, including but not limited to, cable modems, DSL, T1, V series modems, an RS-232 serial port interface or other serial port interface, a parallel port interface, a universal serial bus (USB), a general purpose interface bus (GPIB), an optical interface such as infrared or IrDA, an RF or wireless interface such as Bluetooth, or other interface.

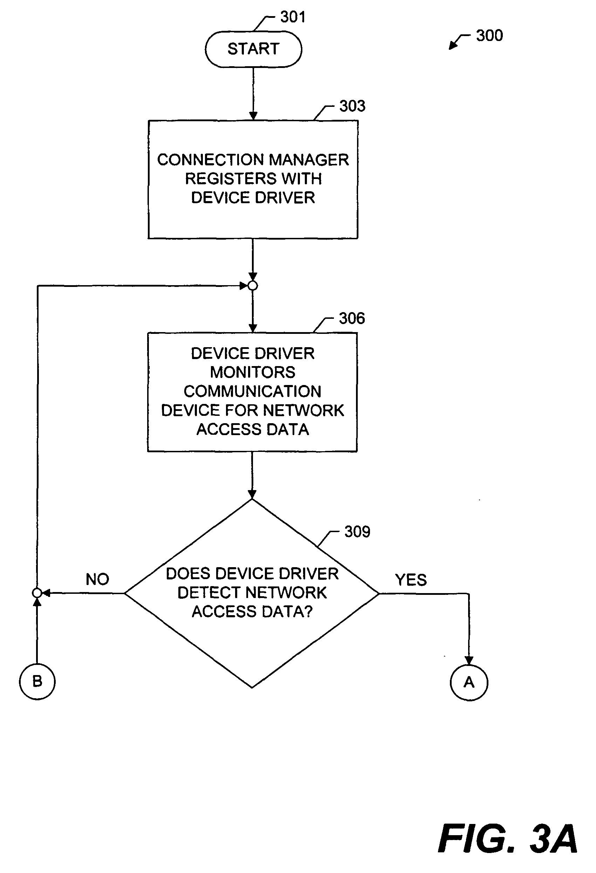

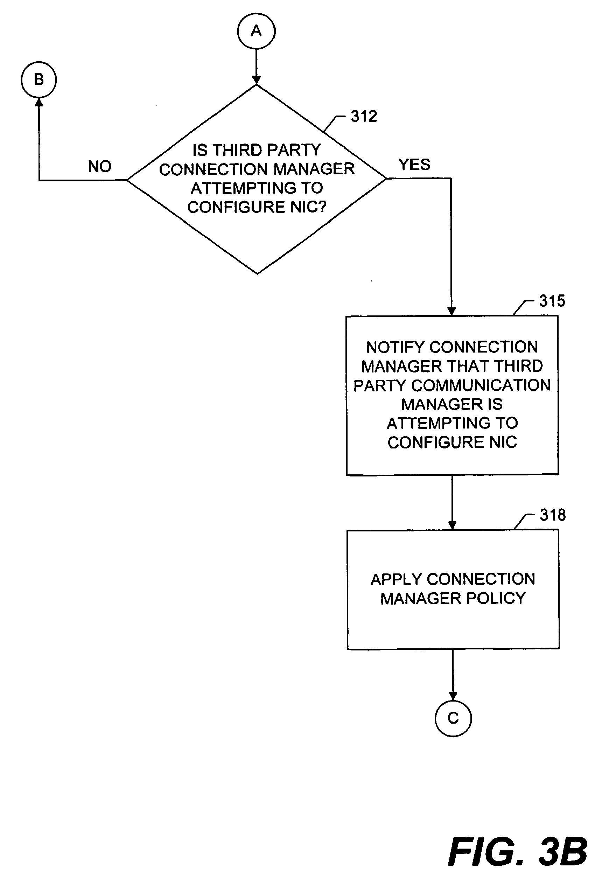

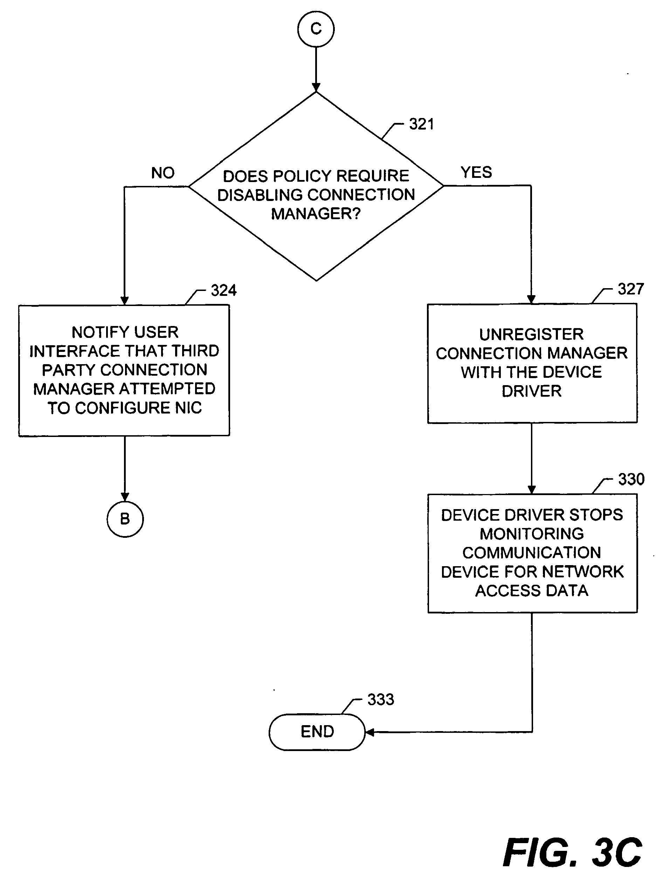

Figs. 3A-3C display a flowchart representation of a method 300 of monitoring and managing connection manager 112 activity in accordance with an exemplary embodiment of the present invention. After starting at 301, the connection manager 112 may register 303 with the device driver 109 associated with the network interface 106, 228. Only one connection manager 112 may register with the device driver 109 of the network interface 106, 228 at any given time. Typically, the connection manager 112 may register with the device driver 109 when the operating system of the communication device 103 initializes (e.g., when the operating system boots up).

The device driver 109 may monitor 306 the communication device 103 for network access data from a third party connection manager 118. The device driver 109 may then determine 309 whether it detects network communication data. If the device driver 109 does not detect network communication data, then the device driver 109 may proceed to 306, described above. If, however, at 309 the device driver 109 detects network communication data, then the device driver 109 may examine the network access data and may determine, at 312, whether a third party connection manager 118 is attempting to configure the network interface 106, 228 (e.g., the third party connection manager 118 is using settable NDIS wireless LAN object identifiers). If, at 312, the device driver 109 determines that a third party connection manager 118 is not attempting to configure the network interface 106, 228, then the device driver 109 may proceed to 306, described above. If at 312 the device driver 109 determines that a third party connection manager 118 is attempting to configure the network interface 106, 228, then the device driver 109 may proceed to 315 where the device driver 109 may notify the connection manager 112 that a third party connection manager 118 has attempted to configure the network interface 106, 228.

At 318, the connection manager 112 may apply a predetermined connection manager policy or policies. Typically, a connection manager policy may be a set of rules or guidelines that require a certain response (i.e., action or inaction) when certain conditions are met, as described above. The connection manager 112 may proceed to 321 where the connection manager 112 may determine whether one or more policies require the disabling of the connection manager 112. If, at 321, one or more policies do not require the disabling of the connection manager 112, then the connection manager 112 may proceed to 324 where the connection manager 112 may notify the user interface 115 that a third party connection manager 118 has attempted to configure the network interface 106, 228. The connection manager 112 may then proceed to 306 above. However, if at 321 the connection manager 112 determines that one or more policies require the disabling of the connection manager 112, then the connection manager 112 may proceed to 327 where the connection manager 112 may unregister with the device driver 109. Next, at 330 the device driver 109 may stop monitoring the communication device 103 for network access data from a third party connection manager 118. The connection manager 112 may terminate operation at 333.

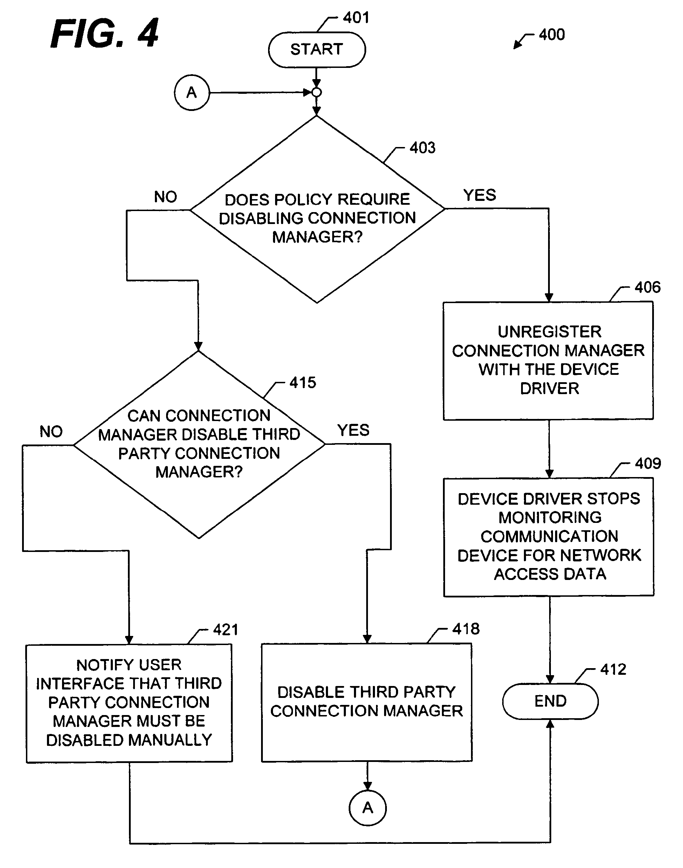

Fig. 4 displays a flowchart representation of a method 400 of applying a policy or policies after detecting network access data from a third party connection manager 118. As described above with reference to Fig. 1, policies or rules may be defined in a variety of configurations and may require the connection manager 112 to perform different functions under different circumstances. Accordingly, the policy or policies may direct the connection manager 112 to unregister under one set of circumstances and may direct the connection manager 112 to disable a third party connection manager 118 under a second set of circumstances.

After starting at 401, the connection manager 112 may determine 403 whether one or more policies may require disabling of the connection manager 112. If one or more policies do require disabling of the connection manager 112, then the connection manager 112 may proceed to unregister 406 with the device driver 109. The device driver 109 may then stop monitoring 409 the communication device 103 for network access data from a third party connection manager 118. The connection manager 112 may then halt operation at 412. If, however, at 403, one or more policies do not require disabling of the connection manager 112, then the connection manager 112 may proceed to 415 where the connection manager 112 may determine whether it can disable the third party connection manager 118 which is attempting to configure the network interface 106, 228. If at 415 the connection manager 112 determines that it can disable the third party connection manager 118 attempting to configure the network interface 106, 228, then the connection manager 112, at 418, may disable the third party connection manager 118 so that the third party connection manager 118 may no longer access or configure the network interface 106, 228 via the device driver 109. The connection manager 112 may then proceed to 403 above. If, however, at 415 the connection manager 112 determines that it cannot disable the third party connection manager 118 attempting to configure the network interface 106, 228, then the connection manager 112 may notify the user interface 115 that the third party connection manager 118 may or should be disabled manually by the user, which the user interface 115 may display to the user. The connection manager 112 may then halt operation at 412.

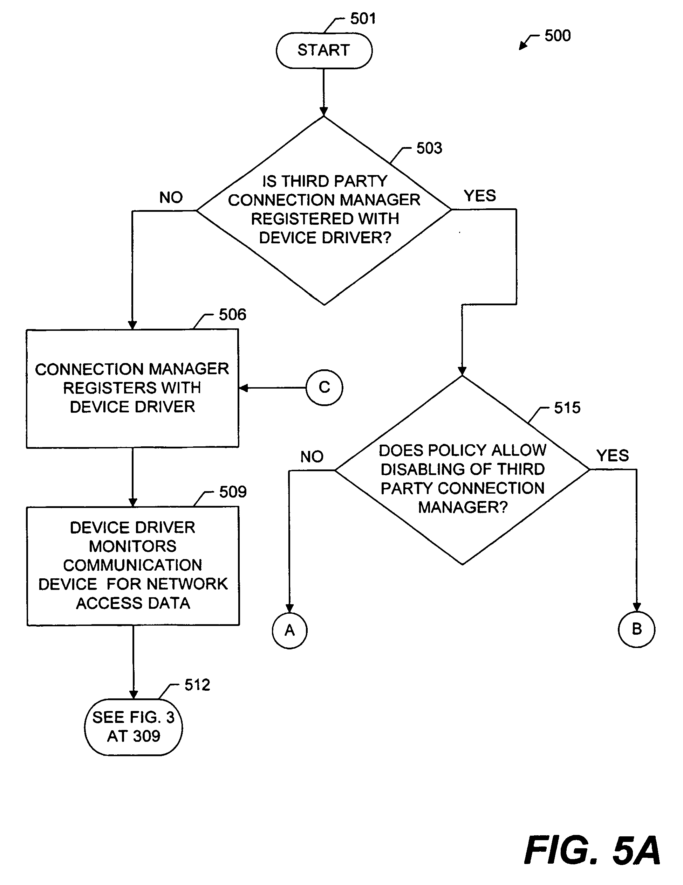

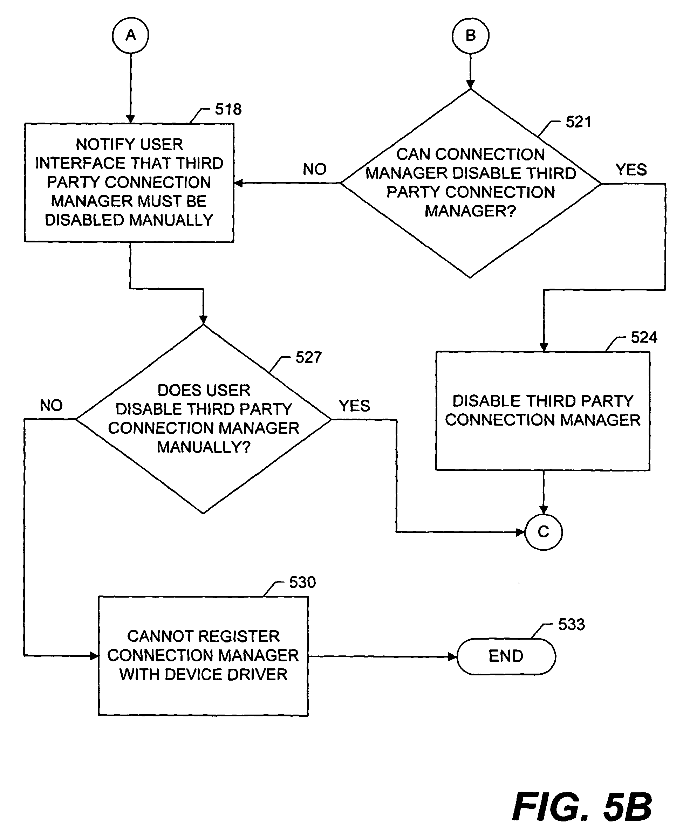

Figs. 5A-5B display a flowchart representation of a method 500 of monitoring and managing connection manager 112 activity when a third party connection manager 118 is registered with the device driver 109. Typically, the connection manager 112 may register with the device driver 109 when the operating system of the communication device 103 initializes. If, however, a third party connection manager 118 is already registered with the device driver 109 before the connection manager 112 attempts to register with the device driver 109, then the third party connection manager 118 may be unregistered so that the connection manager 112 may successfully register with the device driver 109.

After starting at 501, the connection manager 112 may determine 503 whether a third party connection manager 118 is already registered with the device driver 109. If, at 503, a third party connection manager 118 is not registered with the device driver 109, then the connection manager 112 may register 506 with the device driver 109. The device driver 109 may then begin to monitor 509 the communication device 103 for network access data from a third party connection manager 118. The connection manager 112 may then continue operation at 512.

If, however, at 503, a third party connection manager 118 is registered with the device driver 109, then the connection manager 112 may proceed to 515 to determine whether the policy or policies allow for the disabling of the third party connection manager 118. If the policy or policies do not allow for the disabling of the third party connection manager 118 then connection manager 112 at 518 may notify the user interface 115 that a third party connection manager 118 may or should be disabled manually by the user. The user interface 115 may display the notification to the user. Next, at 527 the connection manager 112 may determine whether the user has disabled the third party connection manager 118. If the user has disabled the third party connection manager 118, then the connection manager 112 may proceed to 506 above. If, however, at 527, the user has not disabled the third party connection manager 118, then the connection manager 112 may proceed to 530 where the connection manager 112 does not register with the device driver 109. The connection manager 112 may then halt operation at 533.

If, at 515, the policy or policies do allow for the disabling of the third party connection manager 118 then the connection manager 112 at 521 may determine whether the connection manager 112 can disable the third party connection manager 118. If at 521 the connection manager 112 determines that it cannot disable the third party connection manager 118, then the connection manager 112 may proceed to 518 above. If, however, at 521 the connection manager 112 determines that it can disable the third party connection manager 118, then the connection manager 112 at 524 may disable the third party connection manager 118 so that the third party connection manager 118 cannot configure or access the network interface 106, 228 via the device driver 109. The connection manager 112 then proceeds to 506 above.

## Claims

1. A system comprising:
a driver (109) adapted to control a network interface card (106) and monitor network access data; and
a first connection manager (112) adapted to register with the driver (109) and receive notification data from the driver (109), wherein the driver (109) provides the notification data to the first connection manager (112) when the driver (109) detects network access data from a second connection manager (118).

2. The system of claim 1 further comprising a user interface adapted to receive notification data from the first connection manager, receive user input from a user, and provide the user input to the first connection manager.

3. The system of claim 1 further comprising a user interface adapted to receive notification data from the first connection manager, receive user input from a user, provide the user input to the first connection manager, and display the notification data received from the first connection manager to the user.

4. The system of claim 1, wherein the first connection manager is adapted to unregister with the driver and the driver is further adapted to stop monitoring network access data.

5. The system of claim 1, wherein the first connection manager is adapted to unregister with the driver and the driver is further adapted to stop monitoring network access data when instructed to do so by a user via a user interface.

6. The system of claim 1, wherein the first connection manager is adapted to unregister with the driver and the driver is further adapted to stop monitoring network access data when required by a predetermined policy rule.

7. The system of claim 1, wherein the first connection manager is further adapted to disable the second connection manager.

8. The system of claim 1, wherein network access data comprises network driver interface specification object identifiers.

9. A method comprising:
registering a first connection manager (112) with a driver (109) associated with a network interface card (106);
monitoring network access data from a second connection manager (118); and
notifying the first connection manager (112), if network access data from said second connection manager (118) is detected.

10. The method of claim 9, wherein monitoring network access data from a second connection manager comprises monitoring network driver interface specification object identifiers.

11. The method of claim 9, wherein the method further comprises:
unregistering the first connection manager with the driver; and
terminating monitoring network access data from the second connection manager.

12. The method of claim 9, wherein the method further comprises:
disabling the second connection manager from accessing the network interface card via the driver.

13. The method of claim 9, wherein the method further comprises:
displaying the notification received by the first connection manager, wherein the notification is displayed to a user via a user interface.

14. The method of claim 9, wherein the method further comprises:
displaying the notification received by the first connection manager, wherein the notification displays that the second connection manager must be disabled manually by a user and is displayed to the user via a user interface.

15. The method of claim 9, wherein the method further comprises:
displaying the notification received by the first connection manager, wherein the notification is displayed to a user via a user interface;
receiving user input from the user interface;
determining if user input requires disabling the first connection manager; and
performing a first sequence if user input requires disabling the first connection manager, the first sequence comprising:
unregistering the first connection manager with the driver; and terminating monitoring network access data from the second connection manager.

16. The method of claim 9, wherein the method further comprises:
if the second connection manager is registered with the driver then unregistering the second connection manager with the driver associated with the network interface card,
wherein the unregistering of the second connection manager is prior to registering the first connection manager with the driver associated with the network interface card.

17. A computer-readable medium having computer-executable instructions which, when executed by a suitable computer result in carrying not all the steps of the method of any one of claims 9 to 16.

## Patentansprüche

1. System, welches das Folgende umfasst:
einen Treiber (109), welcher dafür geeignet ist, eine Netzwerk-Schnittstellenkarte (106) zu steuern und Netzwerk-Zugriffsdaten zu überwachen; und
einen ersten Verbindungsmanager (112), welcher dafür geeignet ist, sich bei dem Treiber (109) anzumelden und von dem Treiber (109) Benachrichtigungsdaten zu empfangen, wobei der Treiber (109) dem ersten Verbindungsmanager (112) die Benachrichtigungsdaten bereitstellt, wenn der Treiber (109) Netzwerk-Zugriffsdaten von einem zweiten Verbindungsmanager (118) erfasst.

2. System nach Anspruch 1, welches ferner eine Benutzerschnittstelle umfasst, die dafür geeignet ist, von dem ersten Verbindungsmanager Benachrichtigungsdaten zu empfangen, von einem Benutzer eine Benutzereingabe zu empfangen und die Benutzereingabe dem ersten Verbindungsmanager bereitzustellen.

3. System nach Anspruch 1, welches ferner eine Benutzerschnittstelle umfasst, die dafür geeignet ist, von dem ersten Verbindungsmanager Benachrichtigungsdaten zu empfangen, von einem Benutzer eine Benutzereingabe zu empfangen, die Benutzereingabe dem ersten Verbindungsmanager bereitzustellen und die von dem ersten Verbindungsmanager empfangenen Benachrichtigungsdaten dem Benutzer anzuzeigen.

4. System nach Anspruch 1, wobei der erste Verbindungsmanager dafür geeignet ist, sich bei dem Treiber abzumelden, und der Treiber ferner dafür geeignet ist, die Überwachung der Netzwerk-Zugriffsdaten zu beenden.

5. System nach Anspruch 1, wobei der erste Verbindungsmanager dafür geeignet ist, sich bei dem Treiber abzumelden, und der Treiber ferner dafür geeignet ist, die Überwachung der Netzwerk-Zugriffsdaten zu beenden, wenn ihm dies von einem Benutzer über eine Benutzerschnittstelle befohlen wird.

6. System nach Anspruch 1, wobei der erste Verbindungsmanager dafür geeignet ist, sich bei dem Treiber abzumelden, und der Treiber ferner dafür geeignet ist, die Überwachung der Netzwerk-Zugriffsdaten zu beenden, wenn eine vorgegebene Verfahrensregel dies erforderlich macht.

7. System nach Anspruch 1, wobei der erste Verbindungsmanager ferner dafür geeignet ist, den zweiten Verbindungsmanager abzuschalten.

8. System nach Anspruch 1, wobei die Netzwerk-Zugriffsdaten Network-Driver-Interface-Specification-Objektkennungen umfassen.

9. Verfahren, welches das Folgende umfasst:
Anmelden eines ersten Verbindungsmanagers (112) bei einem Treiber (109), der zu einer Netzwerk-Schnittstellenkarte (106) gehört,
Überwachen von Netzwerk-Zugriffsdaten von einem zweiten Verbindungsmanager (118) und
Benachrichtigen des ersten Verbindungsmanagers (112), wenn Netzwerk-Zugriffsdaten von dem zweiten Verbindungsmanager (118) erkannt werden.

10. Verfahren nach Anspruch 9, wobei das Überwachen von Netzwerk-Zugriffsdaten von einem zweiten Verbindungsmanager das Überwachen von Network-Driver-Interface-Specification-Objektkennungen umfasst.

11. Verfahren nach Anspruch 9, wobei das Verfahren ferner das Folgende umfasst:
Abmelden des ersten Verbindungsmanagers bei dem Treiber; und
Beenden des Überwachens der Netzwerk-Zugriffsdaten von dem zweiten Verbindungsmanager.

12. Verfahren nach Anspruch 9, wobei das Verfahren ferner das Folgende umfasst:
Abschalten des zweiten Verbindungsmanagers dafür, über den Treiber auf die Netzwerk-Schnittstellenkarte zuzugreifen.

13. Verfahren nach Anspruch 9, wobei das Verfahren ferner das Folgende umfasst:
Anzeigen der durch den ersten Verbindungsmanager empfangenen Benachrichtigung, wobei die Benachrichtigung einem Benutzer über eine Benutzerschnittstelle angezeigt wird.

14. Verfahren nach Anspruch 9, wobei das Verfahren ferner das Folgende umfasst:
Anzeigen der durch den ersten Verbindungsmanager empfangenen Benachrichtigung, wobei in der Benachrichtigung angezeigt wird, dass der zweite Verbindungsmanager manuell durch einen Benutzer abgeschaltet werden muss, und die Benachrichtigung dem Benutzer über eine Benutzerschnittstelle angezeigt wird.

15. Verfahren nach Anspruch 9, wobei das Verfahren ferner das Folgende umfasst:
Anzeigen der von dem ersten Verbindungsmanager empfangenen Benachrichtigung, wobei die Benachrichtigung einem Benutzer über eine Benutzerschnittstelle angezeigt wird;
Empfangen einer Benutzereingabe von der Benutzerschnittstelle;
Ermitteln, ob es die Benutzereingabe erforderlich macht, den ersten Verbindungsmanager abzuschalten; und
Durchführen einer ersten Sequenz, wenn es die Benutzereingabe erforderlich macht, den ersten Verbindungsmanager abzuschalten, wobei die erste Sequenz das Folgende umfasst:
Abmelden des ersten Verbindungsmanagers bei dem Treiber und Beenden des Überwachens der Netzwerk-Zugriffsdaten von dem zweiten Verbindungsmanager.

16. Verfahren nach Anspruch 9, wobei das Verfahren ferner das Folgende umfasst:
wenn der zweite Verbindungsmanager bei dem Treiber angemeldet ist, dann Abmelden des zweiten Verbindungsmanagers bei dem zu der Netzwerk-Schnittstellenkarte gehörenden Treiber,
wobei das Abmelden des zweiten Verbindungsmanagers vor dem Anmelden des ersten Verbindungsmanagers bei dem zu der Netzwerk-Schnittstellenkarte gehörenden Treiber geschieht.

17. Computerlesbares Medium, welches computerlesbare Befehle aufweist, welche, wenn sie von einem geeigneten Computer ausgeführt werden, dazu führen, dass alle Schritte des Verfahrens nach einem der Ansprüche 9 bis 16 durchgeführt werden.

## Revendications

1. Système comprenant :
un dispositif de commande (109) adapté pour commander une carte d'interface de réseau (106) et contrôler des données d'accès de réseau ; et
un premier gestionnaire de connexion (112) adapté pour s'enregistrer auprès du dispositif de commande (109) et recevoir des données de notification du dispositif de commande (109), dans lequel le dispositif de commande (109) fournit les données de notification au premier gestionnaire de connexion (112) lorsque le dispositif de commande (109) détecte des données d'accès de réseau à partir du second gestionnaire de connexion (118).

2. Système selon la revendication 1, comprenant en outre une interface d'utilisateur adaptée pour recevoir des données de notification du premier gestionnaire de connexion, recevoir une entrée d'utilisateur d'un utilisateur, et fournir l'entrée d'utilisateur au premier gestionnaire de connexion.

3. Système selon la revendication 1, comprenant en outre une interface d'utilisateur adaptée pour recevoir des données de notification du premier gestionnaire de connexion, recevoir une entrée d'un utilisateur, fournir l'entrée d'utilisateur au premier gestionnaire de connexion, et afficher les données de notification reçues du premier gestionnaire de connexion à l'utilisateur.

4. Système selon la revendication 1, dans lequel le premier gestionnaire de connexion est adapté pour se désenregistrer auprès du dispositif de commande et le dispositif de commande est en outre adapté pour arrêter le contrôle de données d'accès de réseau.

5. Système selon la revendication 1, dans lequel le premier gestionnaire de connexion est adapté pour se désenregistrer auprès du dispositif de commande et le dispositif de commande est en outre adapté pour arrêter le contrôle de données d'accès de réseau lorsqu'un utilisateur l'ordonne via une interface d'utilisateur.

6. Système selon la revendication 1, dans lequel le premier gestionnaire de connexion est adapté pour se désenregistrer auprès du dispositif de commande et le dispositif de commande est en outre adapté pour arrêter le contrôle de données d'accès de réseau lorsque requis par une règle de politique prédéterminée.

7. Système selon la revendication 1, dans lequel le premier gestionnaire de connexion est en outre adapté pour invalider le second gestionnaire de connexion.

8. Système selon la revendication 1, dans lequel des données d'accès de réseau comprennent des identifieurs d'objet de spécification d'interface de dispositif de commande de réseau.

9. Procédé comprenant :
l'enregistrement d'un premier gestionnaire de connexion (112) auprès d'un dispositif de commande (109) associé à une carte d'interface de réseau (106),
le contrôle de données d'accès de réseau à partir d'un second gestionnaire de connexion (118) et
la notification au premier gestionnaire de connexion (112) si des données d'accès de réseau à partir dudit second gestionnaire de connexion (118) sont détectées.

10. Procédé selon la revendication 9, dans lequel le contrôle de données d'accès de réseau à partir d'un second gestionnaire de connexion comprend des identifieurs d'objet de spécification d'interface de dispositif de commande de réseau.

11. Procédé selon la revendication 9, dans lequel le procédé comprend en outre :
le désenregistrement du premier gestionnaire de connexion auprès du dispositif de commande ; et
la fin du contrôle de données d'accès de réseau par le second gestionnaire de connexion.

12. Procédé selon la revendication 9, dans lequel le procédé comprend en outre :
la désactivation du second gestionnaire de connexion à partir de l'accès de la carte d'interface de réseau via le dispositif de commande.

13. Procédé selon la revendication 9, dans lequel le procédé comprend en outre :
l'affichage de la notification reçue par le premier gestionnaire de connexion, dans lequel la notification est affichée à un utilisateur via une interface d'utilisateur.

14. Procédé selon la revendication 9, dans lequel le procédé comprend en outre :
l'affichage de la notification reçue par le premier gestionnaire de connexion, dans lequel la notification affiche que le second gestionnaire de connexion doit être invalidé manuellement par un utilisateur et est affiché à l'utilisateur via une interface d'utilisateur.

15. Procédé selon la revendication 9, dans lequel le procédé comprend en outre :
l'affichage de la notification reçue par le premier gestionnaire de connexion, dans lequel la notification est affichée à un utilisateur via une interface d'utilisateur ;
la réception d'une entrée d'utilisateur à partir de l'interface d'utilisateur ;
la détermination si l'entrée d'utilisateur requiert l'invalidation du premier gestionnaire de connexion ; et
la réalisation d'une première séquence si l'entrée d'utilisateur requiert l'invalidation du premier gestionnaire de connexion, la première séquence comprenant :
le désenregistrement du premier gestionnaire de connexion auprès du dispositif de commande ; et la terminaison du contrôle des données d'accès de réseau auprès du second gestionnaire de connexion.

16. Procédé selon la revendication 9, dans lequel le procédé comprend en outre :
si le second gestionnaire de connexion est enregistré auprès du dispositif de commande alors désenregistrement du second gestionnaire de connexion auprès du dispositif de commande associé à la carte d'interface réseau,
dans lequel le désenregistrement du second gestionnaire de connexion est antérieur à l'enregistrement du premier gestionnaire de connexion au dispositif de commande associé à la carte d'interface de réseau.

17. Support lisible par ordinateur ayant des instructions exécutables par ordinateur qui, lorsqu'elles sont exécutées par un ordinateur approprié résultent en la réalisation de toutes les étapes du procédé d'une quelconque des revendications 9 à 16.
